(19) Europäisches Patentamt
European Patent Office
Office européen des brevets

(11) **EP 4 328 996 A1**

(12) **EUROPEAN PATENT APPLICATION**
published in accordance with Art. 153(4) EPC

(43) Date of publication:
**28.02.2024 Bulletin 2024/09**

(21) Application number: **23753233.8**

(22) Date of filing: **13.02.2023**

(51) International Patent Classification (IPC):
*H01M 4/13* (2010.01)  *H01M 4/04* (2006.01)
*H01M 4/62* (2006.01)  *H01M 10/052* (2010.01)

(52) Cooperative Patent Classification (CPC):
**H01M 4/04; H01M 4/13; H01M 4/62; H01M 10/052;**
Y02E 60/10

(86) International application number:
**PCT/KR2023/002043**

(87) International publication number:
**WO 2023/153887 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.02.2022 KR 20220018630
06.02.2023 KR 20230015470**

(71) Applicant: **LG Energy Solution, Ltd.
Seoul 07335 (KR)**

(72) Inventors:
• **KIM, Il Hyun
Daejeon 34122 (KR)**
• **OH, Sang Seung
Daejeon 34122 (KR)**
• **SONG, Ho Kyung
Daejeon 34122 (KR)**
• **KIM, Shul Kee
Daejeon 34122 (KR)**
• **PARK, Kyu Tae
Daejeon 34122 (KR)**

(74) Representative: **Plasseraud IP
66, rue de la Chaussée d'Antin
75440 Paris Cedex 09 (FR)**

(54) **ELECTRODE MANUFACTURING APPARATUS, ELECTRODE MANUFACTURING METHOD, AND ELECTRODE FOR SECONDARY BATTERY**

(57)    A roller including a magnet among the rollers driving the conveyor line suppresses the phenomenon of binder migration during the drying process, thereby improving the adhesion between the active material layer and the electrode current collector, and improving the ionic conductivity of lithium ion.

[FIG. 2]

Processed by Luminess, 75001 PARIS (FR)

# Description

[Technical Fields]

This application claims the benefit of priority based on Korean Patent Application No. 10-2022-0018630 filed on February 14, 2022, and Korean Patent Application No. 10-2023-0015470 filed on February 6, 2023 and all contents disclosed in the literature of the Korean Patent Application are included as part of this specification.

The present invention relates to an electrode manufacturing device that suppresses the migration of binders and conductors in an active material layer, an electrode manufacturing method, and an electrode for a secondary battery manufactured using the same.

[Background Technology of the Invention]

The present disclosure relates to an electrode manufacturing device that suppresses the migration of binders and conductors in an active material layer, an electrode manufacturing method, and an electrode for a secondary battery manufactured using the same.

As technology for mobile devices has developed and the demand for such mobile devices has increased, the demand for secondary batteries has also rapidly increased. Among secondary batteries, lithium secondary batteries have high energy density and operating voltage and excellent storage and lifetime characteristics and thus are widely used as energy sources for various types of electronic products as well as various types of mobile devices.

In addition, the secondary battery has attracted attention as an energy source of electric vehicles and hybrid electric vehicles, and the like which are proposed as a solution for air pollution and the like of existing gasoline and diesel vehicles using fossil fuels. To be applied as an energy source for electric vehicles, high-powered batteries are required.

Secondary battery, particularly a pouch-type secondary battery, includes an electrode assembly having a positive electrode and a negative electrode and a separator between the positive electrode and the negative electrode. The positive electrode and the negative electrode have a structure in which an active material layer is formed on a current collector. Specifically, an electrode slurry is applied to the current collector, and then the electrode is manufactured through a drying process.

The active material layer is formed by applying and drying an electrode slurry containing active material particles, a binder, and a conductor dispersed in a solvent to the current collector. Alternatively, the active material layer is formed by applying and drying the electrode slurry to a separate support and then laminating a film exfoliated from the support to the current collector.

Among the components comprising the active material layer, the conductor is used to impart conductivity without causing chemical changes to the active material layer. In addition, the binder performs the function of fixing and connecting between the active materials or conductive material particles, as well as between the active materials and the current collectors, thereby greatly affecting the performance of the electrode.

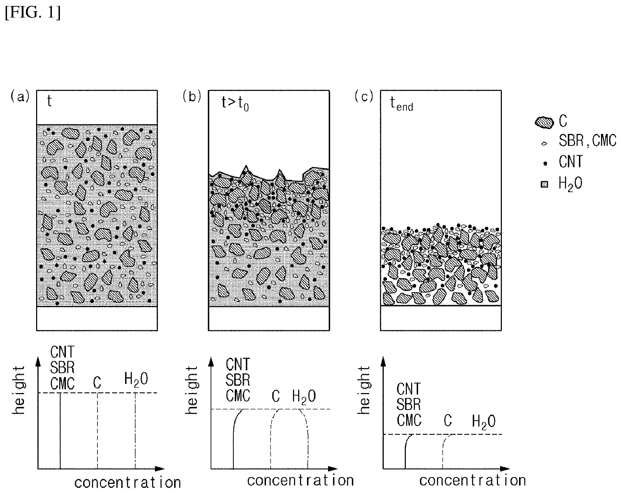

FIG. 1 illustrates a drying process for a negative electrode for a secondary battery according to the prior art. Specifically, FIG. 1 illustrates a process in which an electrode sheet with an active material layer is dried over time as it moves horizontally along a conveyor line. Referring to FIG. 1, (a) illustrates the distribution of components immediately after a negative electrode slurry is applied to a copper foil as a current collector, (b) illustrates the state of the electrode during drying, and (c) illustrates the state of the electrode after drying. Referring to (a), the negative electrode slurry includes a carbon component (C) as a negative electrode active material, carbon nanotube (CNT) as a conductor, styrene-butadiene rubber (SBR) as a first binder component, carboxyl methyl cellulose (CMC) as a second binder component, and water ($H_2O$) as a solvent. Referring to the graph below in (a), each component is dispersed in a uniform concentration along the height of the binder layer. Referring to (b), during the drying process, the height of the active material layer is decreasing as the solvent, water ($H_2O$), evaporates. At the same time, the concentration of the negative electrode active material (C), conductor (CNT), and binder (SBR, CMC) components is increasing towards the top. Furthermore, referring to (c), at the point in which drying is completed, the binder (SBR, CMC) and conductor (CNT) components are concentrated and dispersed towards the top.

During the electrode drying process, the solvent water ($H_2O$) evaporates, causing the mobility of the relatively low percentage of binder (SBR, CMC) and conductor (CNT). This results in binder migration, where the binder is concentrated towards the top in the active material layer. This binder migration reduces the bonding strength between the collector and the active material layer and hinders the movement of lithium ions.

Therefore, there is a need for a technology that effectively suppresses binder migration during the drying process of electrodes without disrupting the process efficiency of electrode manufacturing.

[Description of the Invention]

[Technical Problem]

The present disclosure is directed to solve the above problems, and seeks to provide an electrode manufacturing device which effectively suppresses the phenomenon of binder migration in the electrode drying process, an electrode manufacturing method, and an electrode for a secondary battery manufactured using the same.

[Technical Solution]

The present disclosure provides an electrode manufacturing device. In an exemplary embodiment, the electrode manufacturing device includes:

a conveyor line that travels by being loaded with electrode sheets having an active material layer formed on a current collector material;
a drying furnace for heating the electrode sheets moved by the conveyor line; and rollers for driving the conveyor line.

The active material layer includes an electrode active material, a conductor, and a binder, wherein the conductor is a carbon material bonded with a magnetic material, and
at least one of the rollers is a roller including a magnet.
In a specific exemplary embodiment, the roller including the magnet is located between a starting point on which the electrode sheet with the active material layer is loaded and travels on the conveyor line and a point at which the electrode sheet exits through the drying furnace.
In a more specific exemplary embodiment, the roller including the magnet is located within the section where the electrode sheet passes through the drying furnace.
In an exemplary embodiment, the magnet includes at least one among a permanent magnet and an electromagnet.
For example, the permanent magnet includes at least one among neodymium magnets (Ne-Fe-B), samarium cobalt magnets (Sm-Co), alnico magnets (Fe-Al-Ni-Co), and ferrite magnets.
In a specific exemplary embodiment, the magnetic field strength formed by the magnet is in the range of 1,000 G to 100,000 G.
In an exemplary embodiment, a roller including the magnet includes a magnet disposed in an interior hollow of the roller.
In another exemplary embodiment, the drying furnace heats the electrode sheet in one or more of the following ways: hot air drying, heating coil drying, and induction heat-drying.
In addition, the present disclosure provides an electrode manufacturing method using the electrode drying device described above.
In an exemplary embodiment, the electrode manufacturing method includes:

a transporting step in which an electrode sheet having an active material layer formed on a current collector material is loaded on a conveyor line driven by rollers and transported thereon; and
a drying step in which the electrode sheets are heated in a drying furnace located in the moving path of the conveyor line.

The active material layer includes an electrode active material, a conductor, and a binder, wherein the conductor is a carbon material bonded with a magnetic material. In addition, at least one of the rollers is a roller including a magnet.
In an exemplary embodiment, the content of the conductor and the binder in the electrode sheet subjected to the above drying step satisfies Equation 1 below.

[Equation 1]

$$0.85 \leq B_{top}/B_{bottom} \leq 1.15$$

in Equation 1,

$B_{top}$ represents the combined content (by weight) of the conductor and the binder contained in the 50% area in the upward direction relative to the thickness direction of the active material layer,
$B_{bottom}$ represents the combined content (by weight) of the conductor and the binder contained in the 50% area in the downward direction relative to the thickness direction of the active material layer.

In another exemplary embodiment, the transporting step includes a process in which the electrode sheet passes through a magnetic field region formed by a roller comprising a magnet.
In a specific exemplary embodiment, the drying step is performed under the condition that the electrode sheet passes within the range of the magnetic field formed by the magnet.
For example, the strength of the magnetic field formed by the roller comprising a magnet in the electrode sheet is in the range of 1,000 G to 100,000 G.
In addition, the present disclosure provides an electrode manufactured using the electrode manufacturing device or the electrode manufacturing method described above. The electrode, for example, is an electrode for a secondary battery.
In an exemplary embodiment, the electrode for a secondary battery includes: an electrode current collector; and an active material layer comprising an electrode active material, a conductor, and a binder formed on the current collector. In addition, the conductor is a carbon material bonded with a magnetic material.
Here, the content of the conductor and the binder constituting the active material layer satisfies Equation 1 below.

[Equation 1]

$$0.85 \leq B_{top}/B_{bottom} \leq 1.15$$

in Equation 1,

$B_{top}$ represents the combined content (by weight) of the conductor and the binder contained in the 50% area in the upward direction relative to the thickness direction of the active material layer,

$B_{bottom}$ represents the combined content (by weight) of the conductor and the binder contained in the 50% area in the downward direction relative to the thickness direction of the active material layer.

For example, the conductor includes carbon nanotubes (CNTs) bonded to a magnetic material.

As another example, the magnetic material includes one or more among iron (Fe), nickel (Ni), platinum (Pt), ruthenium (Ru), rhodium (Rh), molybdenum (Mo), osmium (Os), iridium (Ir), rhenium (Re), palladium (Pd), vanadium (V), tungsten (W), cobalt (Co), selenium (Se), bismuth (Bi), tin (Sn), chromium (Cr), titanium (Ti), gold (Au), cerium (Ce), silver (Ag), and copper (Cu).

[Advantageous Effects]

An electrode manufacturing device and an electrode manufacturing method according to the present disclosure suppresses the migration of binder and conductor components in the electrode by including a magnet in a roller driving a conveyor line.

[Brief Description of the Drawings]

FIG. 1 illustrates changes in the distribution for each component in an electrode sheet during the drying process of a negative electrode for a secondary battery according to the prior art.

FIG. 2 illustrates a process according to an electrode manufacturing device according to an exemplary embodiment of the present disclosure.

FIG. 3 illustrates a schematic representation of a change in an electrode sheet according to an electrode manufacturing method according to an exemplary embodiment of the present disclosure.

FIG. 4 illustrates changes in the distribution for each component of an electrode sheet upon application of an electrode manufacturing method according to an exemplary embodiment of the present disclosure.

FIG. 5 illustrates a process according to an electrode manufacturing device according to another exemplary embodiment of the present disclosure.

[Best Mode for Carrying out the Invention]

The following is a detailed description of the present disclosure. It should be noted that the terms or words used in this specification and the claims are not to be construed in their ordinary or dictionary sense, but rather in a sense and concept consistent with the technical disclosure.

The present disclosure provides an electrode manufacturing device. In an exemplary embodiment, the electrode manufacturing device includes:

a conveyor line that travels by being loaded with electrode sheets having an active material layer formed on a current collector material;

a drying furnace for heating the electrode sheets moved by the conveyor line; and rollers for driving the conveyor line.

The active material layer comprises an electrode active material, a conductor, and a binder, wherein the conductor is a carbon material bonded with a magnetic material. In addition, at least one of the rollers is a roller comprising a magnet.

As previously discussed, after drying, electrode active material components relatively high in percentage are concentrated towards the bottom, while the conductor and binder components relatively low in percentage are migrated toward the surface. The binder migration causes a decrease in the bonding strength between the current collector and the active material layer, and the conductors and binders concentrated near the surface decrease electrical conductivity and impede the movement of lithium ions. Binder migration eventually contributes to degradation of battery performance.

In the present disclosure, a magnet is included in a roller driving a conveyor line to suppress the migration of the conductor and binder components by a magnetic field. Specifically, during the heating of the electrode sheet in the drying furnace, the solvent contained in the active material layer is evaporated, and at this time, migration occurs in which the conductor and binder, which are relatively low in percentage compared to the electrode active material, move near the surface of the active material layer. In order to alleviate this migration, the present disclosure disposes magnets on the rollers that drive the conveyor line. The magnetic field generated by the magnet causes the conductor and binder to be attracted to the direction of the magnet by the magnetic field, thereby suppressing the migration of the conductor and binder near the surface of the active material layer.

More specifically, the conductor includes a magnetic material that reacts with the magnetic field. The magnet causes the conductor to move in a downward direction relative to the thickness direction of the active material layer. At this time, the binder, which is in various interaction relationships with the conductor, is affected by the movement of the conductor and moves along the conductor in the downward direction of the active material layer.

Thus, by introducing a roller including a magnet in the electrode manufacturing device, it is possible to induce a uniform distribution of the conductor and the binder in the upper layer and the lower layer based on the thickness direction of the active material layer.

In an exemplary embodiment, the roller including a magnet may be positioned between a point at which the electrode sheet with the active material layer is loaded and travels on a conveyor line and a point at which the electrode sheet exits through a drying furnace. Specifically, the roller including the magnet may be located before the electrode sheet enters the drying furnace, or may be located within the section where the electrode sheet travels through the drying furnace. Furthermore, there may be a plurality of rollers including the magnets (from 2 to 30), and they may be located before the electrode sheet enters the drying furnace and at the same time be located within a passage through the drying furnace.

If the roller including the magnet is positioned before the electrode sheet enters the drying furnace, the conductor and binder are positioned in a downward direction relative to the thickness direction of the active material layer prior to heating. This results in an even distribution of the conductor and binder within the active material layer, even if the conductor and binder subsequently move in the upper direction of the active material layer during the passage of the electrode sheet through the drying furnace.

In another exemplary embodiment, the roller including the magnet is located within the section through which the electrode sheet passes the drying furnace, i.e., the roller including the magnet may be disposed within the section through which the electrode sheet passes the drying furnace.

When the electrode sheet including the active material layer is heated and the solvent in the active material layer evaporates, a force is generated that causes the conductor and binder to move toward the surface of the active material layer. At the same time, the magnet included in the roller generates a force that causes the conductor and binder to move in a direction opposite to the surface direction of the active material layer. Therefore, the force that moves the conductor and binder in the upward direction during the drying process and the force that attracts the conductor and binder to the downward direction of the active material layer by the magnet can be offset to prevent migration.

In addition, one or more rollers including the magnets may be disposed in the section where the electrode sheet passes through the drying furnace. At this time, the number of rollers including the magnets is not particularly limited and can be appropriately selected by considering the horizontal length of the drying furnace, the heating temperature, and the magnetic field strength of the magnets, and for example, 2 to 30 pieces or 2 to 10 pieces can be arranged.

For example, the magnets include at least one among a permanent magnet and an electromagnet. Permanent magnets have the advantages of low cost and high temperature durability. Therefore, permanent magnets are easy to place in a drying furnace that is subject to high temperature conditions and can lower the unit cost of the process.

In an exemplary embodiment, the permanent magnets include at least one among neodymium magnets (Ne-Fe-B), samarium cobalt magnets (Sm-Co), alnico magnets (Fe-Al-Ni-Co), and ferrite magnets.

Neodymium magnets are manufactured from rare earth elements and can achieve high magnetic forces. For example, neodymium magnets are made by sintering neodymium, boron, and iron in a ratio of 2:1:14. Samarium cobalt magnets are made from an alloy of samarium, cobalt, and other rare earth elements. Samarium cobalt magnets have the advantage of combining strong magnetism with good heat resistance, but they are relatively expensive. Alnico magnets have excellent temperature stability and retain their magnetism even at high temperatures of up to 500 to 600°C. Alnico magnets have the advantages of high flux density and excellent durability. Alnico magnets are made from alloys of iron, nickel, aluminum, and cobalt. In addition, the ferrite magnets are made of iron and oxides such as manganese, cobalt, and nickel, and retain their magnetic properties even at temperatures of about 400 to 500°C.

The magnetic strength of the electromagnet can be switched on and off and the magnetic strength can be adjusted if necessary. Thus, the application of electromagnets can increase the process degree of freedom. In the present disclosure, the electromagnet refers to a magnet that generates a magnetic field when an electric current flow through it. The electromagnet assumes a certain polarity when current flows through a wire wound in the form of a coil, and when the magnetic field is superimposed. This is because the magnetic force lines generated at the periphery of the coil are superimposed, and a magnetic force line that acts in one direction is generated at the center of the coil. Electromagnets can also be categorized by the shape in which the coil is wound. For example, a cylindrical coil with a corkscrew-like spiral is called a solenoid, and a rounded coil with both ends brought together is called an annular inductor. The electromagnet may also include a magnetic core made of a ferromagnetic material, such as iron, placed in the center of the coil to make the magnetic field generated stronger.

In an exemplary embodiment, the magnetic field strength formed by the magnet may be in the range of 1,000 G to 100,000 G. As used herein, "G" refers to gauss, a unit of magnetic intensity.

The magnet can adjust the magnetic field strength according to the nature of the magnetic material contained in the conductor. Specifically, the magnetic field strength of the magnet may be in the range of 10,000 to 100,000 G, and more specifically, in the range of 15,000 to 85,000 G or 50,000 to 80,000 G. If the magnetic field strength of the magnet is less than 1,000 G, the magnetic field is not sufficiently applied to the magnetic material of the conductor to exert the desired effect, and if the magnetic field strength exceeds 100,000 G, the magnetic field strength may become excessively large, and the distribution of the conductor and binder may become maldistributed in the direction of the magnet. Meanwhile, the intensity of the magnetic field may be suitably varied depending on the type and content of the components comprising the electrode slurry and the type and nature of the magnetic material of the conductor, and is not necessarily limited to the above range.

In addition, the roller including the magnet may be a structure including a magnet disposed in the inner hollow of the roller. The roller is typically in the form of a circular roller, and the inner portion of the circular roller may be a hollow structure. It is to be understood that the magnets are preferably, but not necessarily, disposed in the inner hollow of the roller.

Meanwhile, the drying furnace may be a structure in which the electrode sheet moved by the conveyor line is dried by heating. The drying furnace may be a structure including one or more heating devices. At this time, the structure and number of heating devices are not particularly limited, and can be appropriately changed according to the heating and drying method and conditions.

In the present disclosure, when a drying furnace heats an electrode sheet that is moved by a conveyor line, it refers to a case where the conveyor line passes through a section that is heated by the drying furnace. For example, based on a downwardly heating drying furnace, the present disclosure has a structure in which the conveyor line passes through the drying furnace. The drying furnace includes a heating device, and the heating device may be located at an upper, lower and/or side portion of the conveyor line, but preferably at an upper and/or side portion of the conveyor line.

Meanwhile, the drying furnace has a structure that encloses a path through which the conveyor line passes, and the section heated by the drying furnace may be a structure enclosed by a bulkhead, except for the inlet and outlet of the conveyor line.

Meanwhile, the drying means of the drying furnace is not particularly limited, and may adopt one or more among hot air drying, heating coil drying, and induction heat-drying. The hot air drying can be carried out by supplying heated air, the heating coil drying is a method of directly heating the electrode sheet through heating by a coil. In addition, the induction heating drying is a method of indirectly heating the electrode sheet through an induction heating method.

Additionally, the present disclosure also provides an electrode manufacturing method. In an exemplary embodiment, an electrode manufacturing method includes:

> a transporting step in which an electrode sheet having an active material layer formed on a current collector material is loaded on a conveyor line driven by rollers and transported thereon; and
> a drying step in which the electrode sheets are heated in a drying furnace located in the moving path of the conveyor line.

The active material layer includes an electrode active material, a conductor, and a binder, wherein the conductor is a carbon material bonded with a magnetic material. In addition, at least one of the rollers is a roller including a magnet.

In the present disclosure, an electrode sheet including an active material layer moves along the conveyor line after it is loaded on the conveyor line. The traveling electrode sheet is dried while being heated by the drying furnace. Furthermore, the electrode sheet moved by the conveyor line is subjected to a magnetic field as it passes through the area of influence of the magnetic field formed by the magnets included in the rollers.

In the drying step, the solvent evaporates, causing the relatively low percentage of the conductor and binder to move to the surface of the active material layer. Meanwhile, the metal particles contained in the conductor inside the active material layer are magnetic and move in the downward direction of the active material layer when affected by the magnetic field, and the binder is also attracted in the downward direction along with the moving conductor. Therefore, by introducing magnets to one or more of the rollers driving the conveyor line, it is possible to prevent the conductor and binder from moving in the upward direction of the active material layer during the drying process for the electrode sheet.

In another exemplary embodiment, conductors and binders in the electrode sheet after the drying step satisfies Equation 1 below.

[Equation 1]

$$0.85 \leq B_{top}/B_{bottom} \leq 1.15$$

in Equation 1,

> $B_{top}$ represents the combined content (by weight) of the conductor and the binder contained in the 50% area in the upward direction relative to the thickness direction of the active material layer,
> $B_{bottom}$ represents the combined content (by weight) of the conductor and the binder contained in the 50% area in the downward direction relative to the thickness direction of the active material layer.

When the content of the conductor and the binder including the active material layer satisfies the conditions of the above Equation 1, it means that it is uniformly distributed without being lopsided in either the upper or lower part of the thickness direction of the active material layer, thereby preventing the migration of the conventional conductor and the binder.

In an exemplary embodiment, the transporting step includes passing the electrode sheet through a magnetic field region formed by a roller including a magnet. For example, to prevent the binder from migrating during the drying step, the roller including the magnet may be located at the bottom of the conveyor line. Accordingly, the magnetic field generated by the magnets will draw the binder together with the conductor towards the bottom of the active material layer. Thereby, the migration of binder is suppressed or prevented.

In a specific exemplary embodiment, the drying step is carried out under the condition that the electrode sheet passes within the range of the magnetic field formed by the magnet. A roller including the magnet may be disposed within the drying furnace.

For example, the intensity of the magnetic field formed by the roller including the magnet through which the electrode sheet passes are in the range of 1,000 G to 100,000 G.

In an exemplary embodiment, the drying steps may perform any one among the hot air drying, heating coil drying, and induction heating drying independently, or may perform two or more methods together, sequentially or continuously.

In addition, the heating temperature of the drying furnace may be set to gradually increase in the Machine Direction (MD). As one example, when the electrode sheet passes through the drying furnace along the conveyor line, the temperature at the point where the electrode sheet begins passing through the drying furnace may be set to be lower than the temperature at the point where the electrode sheet ends passing through the drying furnace. Further, as the electrode sheet passes through the drying furnace, it can be heated by continuously or gradually increasing the temperature. In the case of rapid heating to a high temperature, the rapid heating of the electrode sheet may cause the interface to widen, or bubbles, or surface cracks may be formed due to the difference in thermal expansion coefficient between the active material layer and the electrode current collector.

In the present disclosure, for example, when the section in which the electrode sheet passes through the drying furnace is divided into a first section and a second section according to time, the first section is carried out in the range of 50 degrees to 200 degrees, and the second section is carried out in the range of 150 degrees to 200 degrees, but the heating temperature of the first section is controlled to be lower than the heating temperature of the second section.

In addition, the present disclosure provides an electrode for a secondary battery. In an exemplary embodiment, an electrode for a secondary battery includes: an electrode current collector; and an active material layer comprising an electrode active material, a conductor, and a binder formed on the current collector.

The conductor is formed as a carbon material bonded with a magnetic material.

In addition, the content of the conductor and the binder constituting the active material layer satisfies Equation 1 below.

[Equation 1]

$$0.85 \leq B_{top}/B_{bottom} \leq 1.15$$

in Equation 1,

$B_{top}$ represents the combined content (by weight) of the conductor and the binder contained in the 50% area in the upward direction relative to the thickness direction of the active material layer,

$B_{bottom}$ represents the combined content (by weight) of the conductor and the binder contained in the 50% area in the downward direction relative to the thickness direction of the active material layer.

The figure according to Equation 1 above is in the range of 0.85 to 1.15, in the range of 0.9 to 1.1, or in the range of 0.95 to 1.05. In other words, the active material layer of the electrode sheet that has been dried via a drying furnace can have a content deviation of the conductor and the binder in the upper region ($B_{top}$) and the lower region ($B_{bottom}$) to be in the range of 30% or less, 20% or less, and more particularly 10% or less.

In the present disclosure, the conductor is formed from a carbon material combined with a magnetic material. The carbon material combined with the magnetic material includes not only a case when the magnetic material and the carbon material are chemically combined, but also when they are physically mixed.

For example, the conductor may include a conventionally used conductor as described herein, but includes carbon nanotubes (CNTs) bonded to the magnetic material.

Carbon nanotubes can be categorized as single-walled carbon nanotubes, double-walled carbon nanotubes, multi-walled carbon nanotubes, and rope carbon nanotubes depending on the number of bonds forming the walls, and the type of carbon nanotube is not particularly limited, but as an example, can preferably be a single-walled carbon nanotube.

Meanwhile, the carbon nanotube is a carbon nanotube combined with a magnetic material. Specifically, a metal catalyst may be used in the process of manufacturing the carbon nanotubes. The manufactured carbon nanotubes will have residual metal catalyst components used in the manufacturing process. In this case, a transition metal can be used as a metal catalyst.

The magnetic materials include one or more among iron (Fe), nickel (Ni), platinum (Pt), ruthenium (Ru), rhodium (Rh), molybdenum (Mo), osmium (Os), iridium (Ir), rhenium (Re), palladium (Pd), vanadium (V), tungsten (W), cobalt (Co), selenium (Se), bismuth (Bi), tin (Sn), chromium (Cr), titanium (Ti), gold (Au), cerium (Ce), silver (Ag), and copper (Cu). For example, the magnetic material may be iron (Fe), nickel (Ni) and/or cobalt (Co). The transition metal has an average diameter in the range of 5 to 30 nm.

Meanwhile, the electrode for a secondary battery according to the present disclosure may be, for example, an electrode for a lithium secondary battery. The lithium secondary battery is not particularly limited in shape, but may have, for example, a pouch-type, an angular or a cylindrical structure. For example, the secondary battery is a cylindrical battery. Further, the electrode is a positive electrode or a negative electrode of the secondary cell, for example, a negative electrode for the secondary battery.

The secondary battery may have a structure comprising an electrode assembly including a positive electrode, a negative electrode, and a separator interposed between the positive electrode and the negative electrode, a non-aqueous electrolyte impregnating the electrode assembly, and a cell case embedding the electrode assembly and the electrolyte.

The non-aqueous electrolyte is, for example, an electrolyte comprising a lithium salt.

The positive electrode has a structure in which a positive electrode active material layer is laminated on both sides of the positive electrode current collector. In one example, the positive electrode active material layer includes a positive electrode active material, a conductor, and a binder polymer, and may further include positive electrode additives conventionally used in the art, if desired.

The positive electrode active material may be a lithium-containing oxide, which may be the same or different. As the lithium-containing oxide, a lithium-containing transition metal oxide may be used.

For example, the lithium-containing transition metal oxide may be one or more selected from the group consisting of $Li_xCoO_2$(0.5<x<1.3), $Li_xNiO_2$(0.5<x<1.3), $Li_xMnO_2$(0.5<x<1.3), $Li_xMn_2O_4$(0.5<x<1.3), $Li_x(Ni_aCo_bMn_c)O_2$(0.5<x<1.3, 0<a<1, 0<b<1, 0<c<1, a+b+c=1), $Li_xNi_{1-y}Co_yO_2$(0.5<x<1.3,0<y<1), $Li_xCo_{1-y}Mn_yO_2$(0.5<x<1.3, 0<y<1), $Li_xNi_{1-y}Mn_yO_2$(0.5<x<1.3, 0<y<1), $Li_x(Ni_aCo_bMn_c)O_4$(0.5<x<1.3, 0<a<2, 0<b<2, 0<c<2, a+b+c=2), $Li_xMn_{2-z}Ni_zO_4$(0.5<x<1.3, 0<z<2), $Li_xMn_{2-z}Co_zO_4$(0.5<x<1.3, 0<z<2), $Li_xCoPO_4$(0.5<x<1.3), and $Li_xFePO_4$(0.5<x<1.3) or a mixture of two or more thereof, and the lithium-containing transition metal oxide may be coated with a metal or metal oxide such as aluminum (Al).

It can be seen that the positive electrode active material as described above contains a metal that reacts to a magnet or a magnetic field, and when a magnet or a magnetic field is applied to the active material layer formed by the positive electrode active material as described in the present disclosure, the reactive positive electrode active materials can be expected to gather in the direction in which the magnetic field is formed, and the electrical conductivity of the electrode can be expected to be improved accordingly.

In addition to the above lithium-containing transition metal oxide, one or more of sulfide, selenide, and halide may be used.

The positive electrode active material may be included in the positive electrode active material layer in a range of 94.0 to 98.5 wt%. When the content of the positive electrode active material satisfies the above range, it is advantageous in terms of producing a high-capacity battery and imparting sufficient positive electrode conductivity or inter-electrode adhesion.

The current collector used in the positive electrode can be any highly conductive metal, one to which the positive electrode active material slurry can readily adhere, and one that is not reactive in the voltage range of the secondary battery. Specifically, non-limiting examples of the positive electrode current collector include thin films made of aluminum, nickel, or combinations thereof.

The positive electrode active material layer further includes a conductor. The conductor is typically added at 1 to 30wt%, based on the total weight of the mixture including the positive electrode active material. These conductors are not particularly limited as long as they are conductive without causing chemical changes in the secondary battery. For example, such conductors may include one or more of the following: graphite, such as natural graphite or artificial graphite; carbon black, such as carbon black, acetylene black, ketjen black, channel black, furnace black, lamp black, summer black; conductive fibers, such as carbon fibers or metal fibers; metal powders, such as carbon fluoride, aluminum, nickel powder; conductive whiskers, such as zinc oxide or potassium titanate; conductive metal oxides, such as titanium oxide; and polyphenylene derivatives.

However, as described above, the present disclosure is characterized by a conductor including a magnetic material that responds to a magnetic field. Therefore, it is possible to include a conductor including a magnetic material and additionally include a conventional conductor as in the above examples.

Meanwhile, it is preferable that the magnetic material is a carbon nanotube (CNT), which has a very small size and a high electrical conductivity. Specifically, in an exemplary embodiment, the conductor of the present disclosure may include carbon nanotubes grown using a metal catalyst. Here, the metal catalyst may be a transition metal, and since transition metals are magnetic materials that respond to magnetic fields as described above, a conductor including carbon nanotubes bonded to a transition metal can be expected to move in the direction of a magnetic field.

As a binder component, any binder polymer conventionally used in the art can be used without limitation. For example, poly(vinylidene fluoride-co-hexafluoropropylene) (PVDF-co-HFP), polyvinylidene fluoride (PVDF), and polyacrylonitrile, polymethyl methacrylate, styrene-butadiene rubber (SBR), carboxyl methyl cellulose (CMC), and many other types of binders can be used.

The content of the binder polymer is proportional to the content of the conductor included in the upper positive electrode active material layer and the lower positive electrode active material layer. This is because in order to impart adhesion to the conductor, which has a relatively very small particle size compared to the active material, more binder polymer is required when the conductor content increases, and less binder polymer can be used when the conductor content decreases.

The negative electrode has a structure in which a negative electrode composite layer is laminated on both sides of the negative electrode current collector. In one example, the negative electrode composite layer includes a negative electrode active material, a conductor, and a binder polymer, and may further include negative electrode additives conventionally used in the art, if desired.

The negative electrode active material may include carbon, lithium metal, silicon, or tin. If a carbon material is used as the negative electrode active material, both low-crystalline carbon and high-crystalline carbon may be used. Examples of low-crystalline carbons include soft carbon and hard carbon, while high-crystalline carbons include high temperature calcined carbons such as natural graphite, Kish graphite, pyrolytic carbon, mesophase pitch based carbon fiber, mesocarbon microbeads, mesophase pitches, and petroleum or coal tar pitch derived cokes are representative.

Non-limiting examples of current collectors used in the negative electrode include thin films made of copper, gold, nickel or copper alloys or combinations thereof. Additionally, the current collectors may be laminated with substrates including any of the above materials.

Furthermore, the negative electrode may include conductors and binders conventionally used in the art. However, the conductor is characterized in that the conductor is a conductor including a magnetic material that responds to a magnetic field, as described above, and in one example, the conductor of the present disclosure may include carbon nanotubes bonded with transition metals.

Hereinafter, the contents of the present disclosure are described by means of drawings, etc., but the following drawings are intended to illustrate the present disclosure, and the scope is not limited thereto.

(First Embodiment)

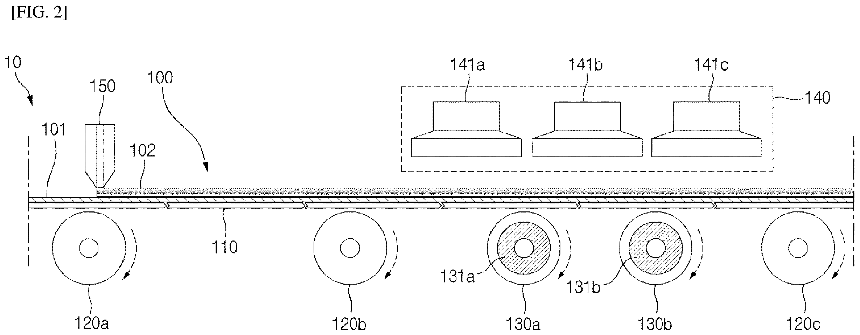

FIG. 2 illustrates a process according to an electrode manufacturing device according to an exemplary embodiment of the present disclosure. Referring to FIG. 2, in an electrode manufacturing device 10 according to the present disclosure, an electrode sheet 100 is supplied by a conveyor line 110. Specifically, the conveyor line 110 is supported and guided by rollers 120a, 120b, 120c, 130a, 130b. At this time, the rollers 120a, 120b, 120c, 130a, 130b are divided into rollers 120a, 120b, 120c that do not include magnets and rollers 130a, 130b that include magnets. Here, the magnets 131a, 131b are neodymium magnets, have a magnetic field strength of about 50,000 G, and are disposed in the inner hollow of the rollers 130a, 130b.

The supplied electrode sheet 100 has a structure including an active material layer 102 on which an electrode slurry discharged from an electrode slurry discharge port 150 is applied to an electrode current collector 101. The electrode slurry has a composition of a negative electrode active material, a conductor, a binder, and a solvent mixed together.

Specifically, 97.0wt% of graphite as the negative electrode active material (C, Hitachi Chemicals), 1.0wt% of carbon nanotubes (CNTs, LUCAN-BT1001M, LG Chem, aspect ratio 100-300) grown using iron (Fe) metal catalyst as a conductor, and 2.0 wt% of polyvinylidene fluoride (KF9700, Kureha) as binder polymer were added to a solvent in which styrene-butadiene rubber (SBR) and carboxyl methyl cellulose (CMC) were mixed a 1:1 ratio to prepare a negative electrode slurry.

The negative electrode slurry is coated on one side of the electrode current collector 101 composed of copper foil at a loading amount of 640 mg/25 cm$^2$ (thickness 100 $\mu$m) to form an active material layer 102.

The electrode sheet 100 including the active material layer 102 passes through a drying furnace 140 along the conveyor line 110. The drying furnace 140 includes a plurality of heating devices 141a, 141b, 141c that heat downwardly, and the drying furnace 140 is located at an upper part of the conveyor line 110 to heat and dry the electrode sheet 100.

While the electrode sheet 100 loaded on the conveyor line 110 passes through the drying furnace 140, the electrode sheet 100 passes over the rollers 130a, 130b including magnets and is affected by the magnetic field formed by the magnets 131a, 131b. The solvent component of the active material layer 102 heated by the drying furnace 140 is dried, and at the same time, the conductor and the binder having a relatively small percentage are moved to the surface of the active material layer 102. At this time, rollers 130a, 130b including magnets are disposed within the section passing through the drying furnace 140 to attract the conductors and binders to the downward direction of the active material layer 102 to prevent them from moving to the surface of the active material layer 102.

(Second Embodiment)

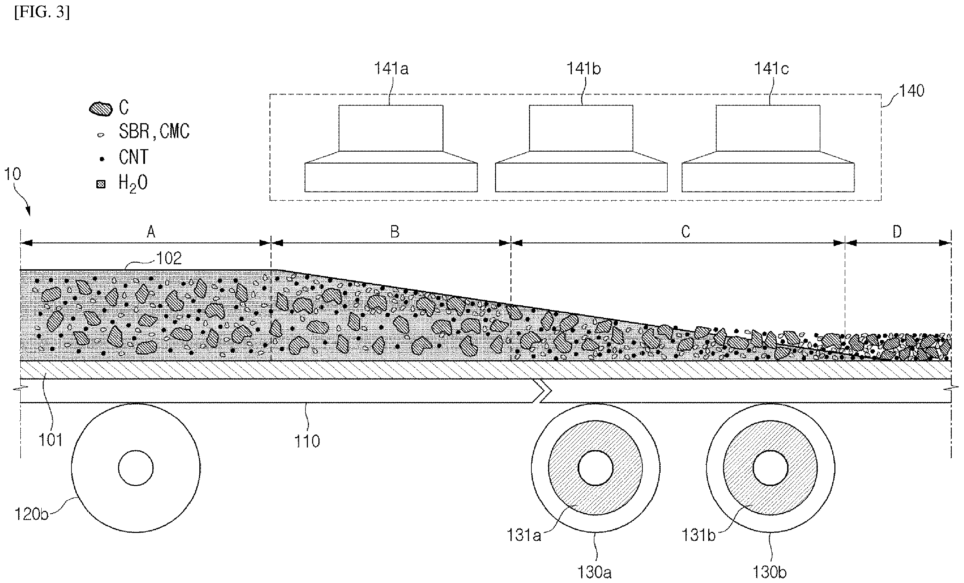

FIG. 3 is a schematic illustration of a change of an electrode sheet according to an electrode manufacturing method according to an exemplary embodiment of the present disclosure.

Referring to FIG. 3, when the electrode sheet 100 loaded on the conveyor line 110 moving horizontally is divided into section A to section D, section A is before the electrode sheet 100 passes through the drying furnace 140, section B is a section in which the electrode sheet 100 passes through the drying furnace 140 but before passing over the rollers 130a, 130b including the magnets, and section C is a section in which the electrode sheet 100 passes over the rollers 130a, 130b including the magnets while passing through the drying furnace 140. Meanwhile, section D is a section in which the solvent in the active material layer 102 has a residual rate of 10% or less after the electrode sheet 100 passes over the drying furnace 140 and the rollers 130a, 130b including the magnets.

In section A, the active material layer 102 is composed of carbon (C) as an electrode active material, carbon nanotubes (CNTs) as a conductor, binders (SBR, CMC), and water ($H_2O$) as a solvent, which are uniformly distributed along the thickness of the active material layer 102, and in section B, the water ($H_2O$) evaporates, and the active material (C), the conductor (CNT), and the binder (SBR, CMC) migrate to the surface of the active material layer (102), and the relatively small percentage of the conductor (CNT) and the binder (SBR, CMC) are concentrated and distributed at the surface of the active material layer (102) in a greater proportion than the active material (C).

Meanwhile, in section C, the active material layer 102 moves in a downward direction relative to the direction facing the magnets 131a, 131b, that is, the thickness direction of the active material layer 102, under the influence of the magnetic field formed by the rollers 130a, 130b including the magnets, and at this time, the binder (SBR, CMC) moves in the downward direction of the active material layer 102 under the influence of the moving conductor (CNT).

In section D, in the active material layer 102 that has completed the drying process after passing through the drying furnace 140, the active material C, the conductor (CNT), and the binder (SBR, CMC) are uniformly distributed along the thickness of the active material layer 102.

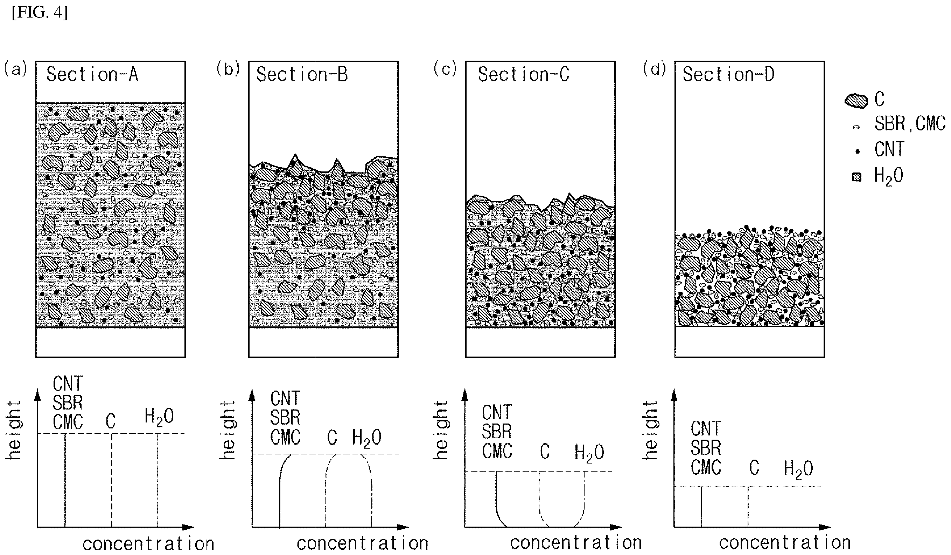

FIG. 4 illustrates changes in the distribution of components of the electrode sheet in sections A through D of FIG. 3.

Referring to FIG. 4, (a), (b), (c), and (d) represent the active material layer 102 in sections A, B, C, and D of FIG. 4, respectively. Referring to the graph below in (a), the active material (C), the conductor (CNT), the binder (SBR, CMC), and the solvent ($H_2O$) are distributed in a uniform concentration along the height of the active material layer 102. In (b), during the heating and drying process, the height of the active material layer 102 is reduced to about 2/3 as the internal solvent water ($H_2O$) evaporates, and the concentrations of the active material (C), conductor (CNT), and binder (SBR, CMC) components are arranged in an upwardly increasing manner. Meanwhile, in (c), the concentration of the conductor (CNT) and the binder (SBR, CMC) components is arranged in a downwardly increasing manner while passing over the rollers 130a, 130b including the magnets while undergoing the heating and drying process, and while being affected by the magnetic field formed by the magnets 131a, 131b. Meanwhile, in (d), after passing over the rollers 130a, 130b including the magnets and completing the heating and drying process, the active material (C), the conductor (CNT), and the binder (SBR, CMC) components have a concentrated structure with a uniform concentration along the height of the active material layer 102.

This means that in the process of heating the electrode sheet 100, the relatively low percentage of the conductor (CNT) and binder (SBR, CMC) components are inevitably migrated toward the surface of the active material layer 102. During the heating process, a magnetic field can be generated to attract the conductor (CNTs) and binder (SBR, CMC) components in a direction opposite to the surface of the electrode sheet 100, thereby preventing the migration of the conductor (CNTs) and binder (SBR, CMC) components.

(Third Embodiment)

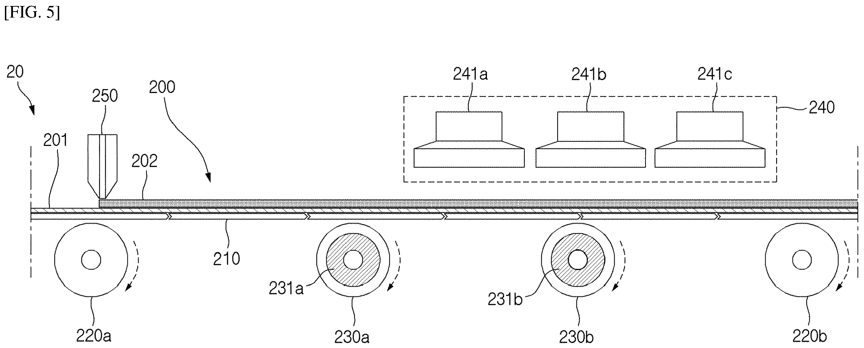

FIG. 5 illustrates a process according to an electrode manufacturing device according to another exemplary embodiment of the present disclosure. Unlike FIG. 2, FIG. 5 is a structure designed to allow electrode sheets to pass over rollers containing magnets before passing through a drying furnace.

Referring to FIG. 5, in the electrode manufacturing device 20 according to the present disclosure, the electrode sheet 200 is supplied by a conveyor line 210. Specifically, the conveyor line 210 is supported and guided by rollers 220a, 220b, 230a, 230b. At this time, the rollers 220a, 220b, 230a, 230b are divided into rollers 220a, 220b not including magnets and rollers 230a, 230b including magnets.

The supplied electrode sheet 200 has a structure including an active material layer 202 on which an electrode slurry discharged from an electrode slurry discharge port 250 is applied to an electrode current collector 201. The electrode slurry is a mixture of a negative electrode active material, a conductor, a binder, and a solvent.

When the electrode sheet 200 passes over the roller 230a including the magnet before passing through the drying furnace 240, the magnetic field formed by the magnet 231a causes the conductor and binder constituting the active material layer 202 of the electrode sheet 200 to be attracted by the magnetic field and move in a downward direction relative to the thickness direction of the active material layer 202.

The electrode sheet 200, which has passed over the roller 230a including the magnet, passes through the drying furnace 240 with the conductor and binder settled in the downward direction of the active material layer 202. The drying furnace 240 includes a plurality of heating units 241a, 241b, 241c that heat downwardly, and the drying furnace 240 is located at the upper part of the conveyor line 210 to heat and dry the electrode sheet 200.

As the electrode sheet 200 passes through the drying furnace 240, the solvent component of the active material layer 202 heated by the drying furnace 240 is dried, while the relatively small percentage of the conductor and the binder are moved to the surface of the electrode sheet 200. At this time, the electrode sheet 200 passing through the drying furnace 240 passes over the roller 230b including the magnet, and under the influence of the magnetic field formed by the magnet 231b, the conductor and the binder are attracted to the downward direction of the active material layer 202, which can reduce the migration of the conductor and the binder.

In other words, because the electrode sheet 200 has already moved the conductor and binder in the downward direction of the active material layer 202 before passing through the drying furnace 240, the drying furnace 240 may increase the migration path of the conductor and binder when the conductor and binder are moved in the upward direction, thereby increasing the time required for the conductor and binder to migrate to the surface.

Therefore, by designing the electrode sheet 200 to pass over the roller 230a including the magnet before passing through the drying furnace 240, there is an effect of reducing the migration of the conductor and binder during the drying process.

While preferred embodiments of the present disclosure have been described above with reference to the drawings, it will be understood by those skilled in the art or having ordinary knowledge of the art that various modifications and changes can be made to the present disclosure without departing from the field of thought and technology described in the claims.

Accordingly, the technical scope of the disclosure is not limited to what is recited in the detailed description of the specification, but is to be defined by the claims.

[Reference Numerals]

10, 20: ELECTRODE MANUFACTURING DEVICE
100, 200: ELECTRODE SHEET
101, 201: ELECTRODE CURRENT COLLECTOR
102, 202: ACTIVE MATERIAL LAYER
110, 210: CONVEYOR LINE
120a, 120b, 120c, 220a, 220b: ROLLERS NOT CONTAINING MAGNETS
130a, 130b, 230a, 230b: ROLLERS CONTAINING MAGNETS
131a, 131b, 231a, 231b: MAGNETS
140, 240: DRYING FURNACE
141a, 141b, 141c, 241a, 241b, 241c: HEATING DEVICE
150, 250: ELECTRODE SLURRY DISCHARGE PORT

**Claims**

1. An electrode manufacturing device, comprising:

   a conveyor line configured to be loaded with electrode sheets having an active material layer formed on a current collector material, the active material layer including an electrode active material, a conductor including a carbon material bonded with a magnetic material, and a binder;
   a drying furnace for heating the electrode sheets moved by the conveyor line; and
   rollers for driving the conveyor line,
   wherein at least one of the rollers is a roller comprising a magnet.

2. The electrode manufacturing device of claim 1, wherein
   the roller comprising the magnet is located between a starting point on which the electrode sheet with the active material layer is loaded and a point at which the electrode sheet exits through the drying furnace.

3. The electrode manufacturing device of claim 1, wherein
   the roller comprising the magnet is located within a section where the electrode sheet passes through the drying furnace.

4. The electrode manufacturing device of claim 1, wherein
   the magnet comprises at least one among a permanent magnet and an electromagnet.

5. The electrode manufacturing device of claim 4, wherein
   the magnet includes a permanent magnet and the permanent magnet includes at least one neodymium magnet (Ne-Fe-B), a samarium cobalt magnet (Sm-Co), an alnico magnet (Fe-Al-Ni-Co), or a ferrite magnet.

6. The electrode manufacturing device of claim 1, wherein
   a magnetic field strength formed by the magnet is in a range of 1,000 G to 100,000 G.

7. The electrode manufacturing device of claim 1, wherein
   the roller comprising the magnet comprises a magnet disposed in an interior hollow of the roller.

8. The electrode manufacturing device of claim 1, wherein
   the drying furnace is configured to heat the electrode sheet by hot air drying, heating coil drying, or induction heat-drying.

9. An electrode manufacturing method, comprising:

a transporting step in which an electrode sheet having an active material layer formed on a current collector material is loaded on a conveyor line driven by rollers and transported thereon, the active material layer includes an electrode active material, a conductor, and a binder, wherein the conductor is a carbon material bonded with a magnetic material; and a drying step in which the electrode sheets are heated in a drying furnace located in a moving path of the conveyor line, wherein at least one of the rollers is a roller including a magnet.

10. The electrode manufacturing method of claim 9, wherein

content of the conductor and the binder in the electrode sheet subjected to the drying step satisfies Equation 1 below:

[Equation 1]

$$0.85 \le B_{top}/B_{bottom} \le 1.15$$

in Equation 1,

$B_{top}$ represents combined content (by weight) of the conductor and the binder contained in a 50% area in an upward direction relative to a thickness direction of the active material layer, $B_{bottom}$ represents combined content (by weight) of the conductor and the binder contained in the 50% area in a downward direction relative to the thickness direction of the active material layer.

11. The electrode manufacturing method of claim 10, wherein the transporting step comprises a process in which the electrode sheet passes through a magnetic field region formed by a roller comprising a magnet.

12. The electrode manufacturing method of claim 10, wherein a strength of the magnetic field formed by the roller comprising a magnet in the electrode sheet is in a range of 1,000 G to 100,000 G.

13. An electrode for secondary battery comprising:

an electrode current collector; and an active material layer comprising an electrode active material, a conductor, and a binder formed on the current collector, wherein the conductor is formed as a carbon material bonded with a magnetic material, and content of the conductor and the binder comprising the active material layer satisfies Equation 1 below:

[Equation 1]

$$0.85 \le B_{top}/B_{bottom} \le 1.15$$

in Equation 1,

$B_{top}$ represents combined content (by weight) of the conductor and the binder contained in a 50% area in an upward direction relative to a thickness direction of the active material layer, $B_{bottom}$ represents combined content (by weight) of the conductor and the binder contained in the 50% area in a downward direction relative to the thickness direction of the active material layer.

14. The electrode for secondary battery of claim 13, wherein the conductor comprises carbon nanotubes (CNTs) bonded to a magnetic material.

15. The electrode for secondary battery of claim 13, wherein the magnetic material comprises one or more of iron (Fe), nickel (Ni), platinum (Pt), ruthenium (Ru), rhodium (Rh), molybdenum (Mo), osmium (Os), iridium (Ir), rhenium (Re), palladium (Pd), vanadium (V), tungsten (W), cobalt (Co), selenium (Se), bismuth (Bi), tin (Sn), chromium (Cr), titanium (Ti), gold (Au), cerium (Ce), silver (Ag), or copper (Cu).

[FIG. 1]

[FIG. 2]

EP 4 328 996 A1

[FIG. 3]

Legend:
- C
- SBR, CMC
- CNT
- H₂O

Reference numerals: 10, 101, 102, 110, 120b, 130a, 130b, 131a, 131b, 140, 141a, 141b, 141c

Sections: A, B, C, D

EP 4 328 996 A1

[FIG. 4]

(a) Section-A  (b) Section-B  (c) Section-C  (d) Section-D

C
SBR,CMC
CNT
$H_2O$

EP 4 328 996 A1

[FIG. 5]

## INTERNATIONAL SEARCH REPORT

| | International application No. |
|---|---|
| | **PCT/KR2023/002043** |

### A. CLASSIFICATION OF SUBJECT MATTER

**H01M 4/13**(2010.01)i; **H01M 4/04**(2006.01)i; **H01M 4/62**(2006.01)i; **H01M 10/052**(2010.01)i

According to International Patent Classification (IPC) or to both national classification and IPC

### B. FIELDS SEARCHED

Minimum documentation searched (classification system followed by classification symbols)

H01M 4/13(2010.01); H01M 10/052(2010.01); H01M 4/04(2006.01); H01M 4/08(2006.01); H01M 4/1391(2010.01); H01M 4/1393(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 (electrode), 제조 장치 (producing device), 도전재 (conductive agent), 자성 (magnetism), 롤러 (roller), 컨베이어 (conveyer), 건조 (drying), 들뜸 (migration)

### C. DOCUMENTS CONSIDERED TO BE RELEVANT

| Category* | Citation of document, with indication, where appropriate, of the relevant passages | Relevant to claim No. |
|---|---|---|
| Y | JP 06-068870 A (YUASA CORP.) 11 March 1994 (1994-03-11)<br>See abstract; paragraphs [0004], [0007] and [0010]-[0015]; and figure 1. | 1-15 |
| Y | KR 10-2017-0090720 A (LG CHEM, LTD.) 08 August 2017 (2017-08-08)<br>See abstract; paragraphs [0009], [0026], [0030], [0033] and [0035]; and figure 2. | 1-15 |
| Y | KR 10-2019-0049803 A (BATTRION AG) 09 May 2019 (2019-05-09)<br>See abstract; paragraphs [0040]-[0041] and [0082]; and figures 1 and 4. | 4-7,12 |
| A | JP 2021-082396 A (TOYOTA MOTOR CORP. et al.) 27 May 2021 (2021-05-27)<br>See entire document. | 1-15 |
| A | KR 10-2018-0065385 A (SAMSUNG SDI CO., LTD.) 18 June 2018 (2018-06-18)<br>See entire document. | 1-15 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 June 2023** | **01 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/002043**

| Patent document cited in search report | | | Publication date (day/month/year) | Patent family member(s) | | | Publication date (day/month/year) |
|---|---|---|---|---|---|---|---|
| JP | 06-068870 | A | 11 March 1994 | None | | | |
| KR | 10-2017-0090720 | A | 08 August 2017 | KR | 10-2498353 | B1 | 08 February 2023 |
| KR | 10-2019-0049803 | A | 09 May 2019 | CH | 712877 | A2 | 15 March 2018 |
| | | | | CH | 712912 | A2 | 15 March 2018 |
| | | | | CN | 109690840 | A | 26 April 2019 |
| | | | | EP | 3510658 | A1 | 17 July 2019 |
| | | | | JP | 2019-534155 | A | 28 November 2019 |
| | | | | JP | 7237363 | B2 | 13 March 2023 |
| | | | | US | 11189824 | B2 | 30 November 2021 |
| | | | | US | 2019-0190010 | A1 | 20 June 2019 |
| | | | | WO | 2018-047054 | A1 | 15 March 2018 |
| JP | 2021-082396 | A | 27 May 2021 | None | | | |
| KR | 10-2018-0065385 | A | 18 June 2018 | CN | 108172751 | A | 15 June 2018 |
| | | | | CN | 108172751 | B | 09 February 2021 |
| | | | | KR | 10-2483995 | B1 | 30 December 2022 |
| | | | | US | 10263247 | B2 | 16 April 2019 |
| | | | | US | 2018-0159118 | A1 | 07 June 2018 |

Form PCT/ISA/210 (patent family annex) (July 2022)

**EP 4 328 996 A1**

## REFERENCES CITED IN THE DESCRIPTION

### Patent documents cited in the description

- KR 1020220018630
- KR 1020230015470